# EUROPEAN PATENT APPLICATION

(11) **EP 4 307 413 A1**
(43) Date of publication of application: **17.01.2024**
(21) Application number: 22766861.3
(22) Date of filing: 25.02.2022
(51) Int. Cl.: H01M 8/04, H01M 8/04228, H01M 8/04303, H01M 8/04313, H01M 8/0438, H01M 8/04746, H01M 8/10, H01M 8/12

(54) **FUEL CELL SYSTEM**

(30) Priority: 08.03.2021 JP 2021035933
(71) Applicant: Panasonic Intellectual Property Management Co., Ltd., Osaka-shi, Osaka 540-6207 (JP)
(72) Inventor: YAMAMOTO, Yusuke, Osaka-shi, Osaka 540-6207 (JP); HORI, Shinichiro, Osaka-shi, Osaka 540-6207 (JP); TSUYUGUCHI, Kouhei, Osaka-shi, Osaka 540-6207 (JP); KANEKO, Yota, Osaka-shi, Osaka 540-6207 (JP)
(74) Representative: Grünecker Patent- und Rechtsanwälte PartG mbB
(86) International application number: PCT/JP2022/007904
(87) International publication number: WO 2022/190902

(57) **Abstract**

A fuel cell system (200) according to the present disclosure includes a fuel cell (100), a fuel gas path (1), a gas switch (2), a recycling path (3), a first discharge path (4), a first discharge unit (5), a second discharge path (6), a second discharge unit (7), and a controller (8). An initial state is defined as a state in which the gas switch (2) is in a first gas-flow stopping state, the first discharge unit (5) is in a second gas-flow stopping state, and the second discharge unit (7) is in a third gas-flow stopping state. To perform a drainage operation for discharging condensed water in the fuel gas path (1), the fuel cell (100), and the recycling path (3) during the stop of power generation by the fuel cell (100), the controller (8) switches the gas switch (2) in the initial state from the first gas-flow stopping state to a first gas-flowing state and switches the first discharge unit (5) in the initial state from the second gas-flow stopping state to a second gas-flowing state.

## Description

### BACKGROUND

### 1. Technical Field

The present disclosure relates to a fuel cell system.

### 2. Description of the Related Art

Patent Literature 1 discloses a system for draining remaining water in a fuel cell, the system including: a reactant gas supply unit configured to supply a reactant gas through a gas flow path to the fuel cell; and a gas pressure control unit configured to increase the pressure of the reactant gas supplied from the reactant gas supply unit during the stop of operation of the fuel cell and then supply the reactant gas with the increased pressure to the gas path and thereby drain remaining water in the gas flow path to the outside.

### Citation List

Patent Literature 1: Japanese Unexamined Patent Application Publication No. 2002-305017

### SUMMARY

The present disclosure provides a technology for discharging condensed water while reducing the deterioration of a fuel cell and substantially preventing inflammable gas from flowing out to the outside of a fuel cell system during the stop of operation of the system.

A fuel cell system according to the present disclosure includes: a fuel cell configured to generate electric power by using a hydrogen-containing gas; a fuel gas path connected to the fuel cell and configured to allow the hydrogen-containing gas to flow therethrough; a gas switch disposed in the fuel gas path and configured to switch between a first gas-flowing state causing the hydrogen-containing gas to flow through the fuel gas path and a first gas-flow stopping state stopping the hydrogen-containing gas flowing through the fuel gas path; and a recycling path connected to the fuel gas path between the gas switch and the fuel cell and configured to allow the hydrogen-containing gas not having been used in power generation by the fuel cell to flow through the fuel gas path.

The fuel cell system further includes: a first discharge path connected to the recycling path and configured to allow discharge, to the outside, of condensed water formed from water vapor contained in the hydrogen-containing gas; a first discharge unit disposed in the first discharge path and configured to switch between a second gas-flowing state causing the hydrogen-containing gas to flow through the first discharge path and a second gas-flow stopping state stopping the hydrogen-containing gas flowing through the first discharge path; a second discharge path connected to the recycling path and configured to allow discharge, to the outside, of the hydrogen-containing gas flowing through the fuel gas path; and a second discharge unit disposed in the second discharge path and configured to switch between a third gas-flowing state causing the hydrogen-containing gas to flow through the second discharge path and a third gas-flow stopping state stopping the hydrogen-containing gas flowing through the second discharge path; and a controller configured to operate the gas switch, the first discharge unit, and the second discharge unit.

An initial state is defined as a state in which the gas switch is in the first gas-flow stopping state, the first discharge unit is in the second gas-flow stopping state, and the second discharge unit is in the third gas-flow stopping state. To perform a drainage operation for discharging the condensed water in the fuel gas path, the fuel cell, and the recycling path during the stop of power generation by the fuel cell, the controller switches the gas switch in the initial state from the first gas-flow stopping state to the first gas-flowing state and switches the first discharge unit in the initial state from the second gas-flow stopping state to the second gas-flowing state.

The fuel cell system according to the present disclosure is capable of discharging the condensed water while reducing the deterioration of the fuel cell and substantially preventing inflammable gas from flowing out to the outside of the fuel cell system, during the stop of operation of the system. Hence, a decrease in the durability of the fuel cell system is reduced. Furthermore, the occurrence of an unsafe state caused by the flow of inflammable gas to the outside of the fuel cell system is substantially prevented.

### BRIEF DESCRIPTION OF THE DRAWINGS

FIG. 1 is a configuration diagram of a fuel cell system according to a first embodiment of the present disclosure.
FIG. 2 is a flow chart of a drainage operation using pressure detection according to the first embodiment of the present disclosure.
FIG. 3 is a diagram illustrating the change of pressure during the drainage operation illustrated in FIG. 2.
FIG. 4 is a flow chart of control utilizing the passage of time according to the first embodiment of the present disclosure.
FIG. 5 is a flow chart of the drainage operation utilizing water level detection according to the first embodiment of the present disclosure.
FIG. 6 is a diagram illustrating the change of water level during the drainage operation illustrated in FIG. 5.
FIG. 7 is a flow chart of the drainage operation utilizing pressure detection according to the first embodiment.
FIG. 8 is a diagram illustrating the change of pressure over time during the drainage operation illustrated in FIG. 7.

### DETAILED DESCRIPTIONS

Hereinafter, embodiments will be described in detail with reference to the drawings. Descriptions that are more detailed than necessary may, however, be omitted. For example, detailed descriptions on already well-known matters and duplicate descriptions on substantially the same configurations may be omitted.

The accompanying drawings and the following descriptions are provided to help those skilled in the art fully understand the present disclosure, and do not intend to thereby restrict the subject matters recited in the claims.

### (First Embodiment)

### [1-1. Configuration]

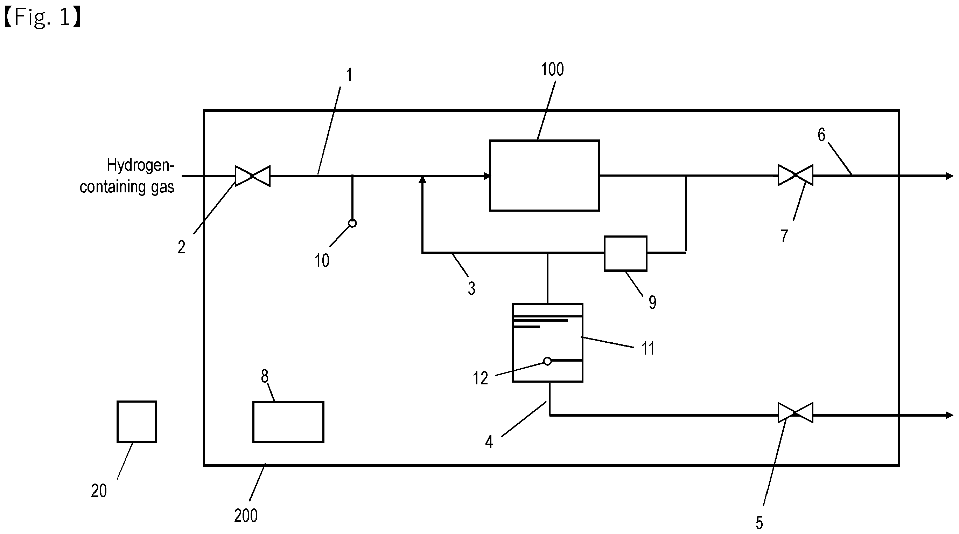

FIG. 1 is a configuration diagram of a fuel cell system according to a first embodiment of the present disclosure.

In FIG. 1, fuel cell system 200 includes fuel cell 100, fuel gas path 1, gas switch 2, recycling path 3, first discharge path 4, first discharge unit 5, second discharge path 6, second discharge unit 7, controller 8, gas circulator 9, pressure detector 10, tank 11, water level detector 12, and operation unit 20.

Fuel cell 100 is a fuel cell configured to generate electric power by using a hydrogen-containing gas. Specifically, fuel cell 100 generates electric power through a chemical reaction using hydrogen contained in a hydrogen-containing gas supplied from the outside. Note that, in the chemical reaction in the fuel cell 100, not all the hydrogen-containing gas supplied to fuel cell 100 is used, but, a part of the hydrogen-containing gas, the part not having been used by fuel cell 100, is discharged from fuel cell 100.

Fuel cell 100 in the present embodiment is, for example, a polymer electrolyte fuel cell. Note that fuel cell 100 is not limited to a polymer electrolyte fuel cell, and may be, for example, a solid oxide fuel cell.

Fuel gas path 1 is connected to fuel cell 100 and configured to allow the hydrogen-containing gas to flow through fuel gas path 1. The hydrogen-containing gas is supplied, for example, from a hydrogen storage tank to fuel cell 100 via fuel gas path 1.

Gas switch 2 is a valve disposed in fuel gas path 1. Gas switch 2 is configured to switch between a gas-flowing state causing the hydrogen-containing gas to flow through fuel gas path 1 and a gas-flow stopping state stopping the hydrogen-containing gas flowing through fuel gas path 1. Gas switch 2 in the present embodiment is, for example, a solenoid valve.

Recycling path 3 is a path connected between gas switch 2 and fuel cell 100 and configured to allow a part of the hydrogen-containing gas, the part not having been used in a chemical reaction during power generation by fuel cell 100, to flow through fuel gas path 1.

First discharge path 4 is a path connected to recycling path 3 and configured to allow discharge, to the outside, of condensed water formed from water vapor contained in the hydrogen-containing gas flowing through recycling path 3.

First discharge unit 5 is a valve disposed on first discharge path 4. First discharge unit 5 is configured to switch between a gas-flowing state causing the hydrogen-containing gas to flow through first discharge path 4 and a gas-flow stopping state stopping the hydrogen-containing gas flowing through first discharge path 4. First discharge unit 5 in the present embodiment is a solenoid valve, for example.

Second discharge path 6 is a path connected to recycling path 3 and configured to allow discharge, to the outside, of the hydrogen-containing gas flowing through recycling path 3.

Here, in fuel cell 100, hydrogen is used during power generation by fuel cell 100. Accordingly, the concentration of hydrogen in the hydrogen-containing gas flowing through the recycling path 3 is relatively lower than the concentration of hydrogen in the hydrogen-containing gas supplied to fuel cell 100. The hydrogen-containing gas supplied to fuel cell 100 is mixed with the hydrogen-containing gas having a relatively decreased hydrogen concentration and flowing through recycling path 3. Accordingly, the concentration of hydrogen in the hydrogen-containing gas supplied to fuel cell 100 gradually decreases as power generation by fuel cell 100 proceeds.

Via second discharge path 6, the hydrogen-containing gas having a decreased hydrogen concentration is discharged at regular intervals, so that the output of fuel cell 100 is prevented from declining. Note that the regular intervals are intervals of 3 minutes, for example.

Second discharge unit 7 is a valve disposed on second discharge path 6. Second discharge unit 7 is configured to switch between a gas-flowing state causing the hydrogen-containing gas to flow through second discharge path 6 and a gas-flow stopping state stopping the hydrogen-containing gas flowing through second discharge path 6. Second discharge unit 7 in the present embodiment is a solenoid valve, for example.

Controller 8 is configured to operate gas switch 2, first discharge unit 5, and second discharge unit 7. Controller 8 in the present embodiment is configured with, for example, a digital signal processor (DSP) including an A/D conversion circuit, an input/output circuit, an arithmetic circuit, a memory storage, and the like.

Gas circulator 9 is a pump disposed between fuel cell 100 and first discharge path 4 and configured to circulate the hydrogen-containing gas from recycling path 3 to fuel gas path 1. Gas circulator 9 in the present embodiment is a diaphragm pump, for example.

Pressure detector 10 is a pressure gauge disposed between gas switch 2 and fuel cell 100 and configured to measure the pressure of the hydrogen-containing gas flowing through fuel gas path 1. Pressure detector 10 in the present embodiment is a pulse-output pressure sensor, for example.

Tank 11 is a tank disposed in recycling path 3 and configured to store condensed water formed from water vapor contained in the hydrogen-containing gas flowing through recycling path 3. In the present embodiment, there may be employed a configuration in which tank 11 is not provided and the condensed water is stored in first discharge path 4 instead.

Water level detector 12 is a sensor disposed inside tank 11 and configured to detect the water level of the condensed water stored in tank 11. Water level detector 12 in the present embodiment is configured with a float switch, for example. In the case where fuel cell system 200 does not include tank 11, water level detector 12 may be provided in first discharge path 4. In this case, water level detector 12 may be configured to detect the water level of the condensed water stored in first discharge path 4.

Operation unit 20 is configured to receive a user's direction. The user's direction received by operation unit 20 is transmitted to controller 8. Operation unit 20 in the present embodiment is configured with a PC application, for example.

### [1-2. Operation]

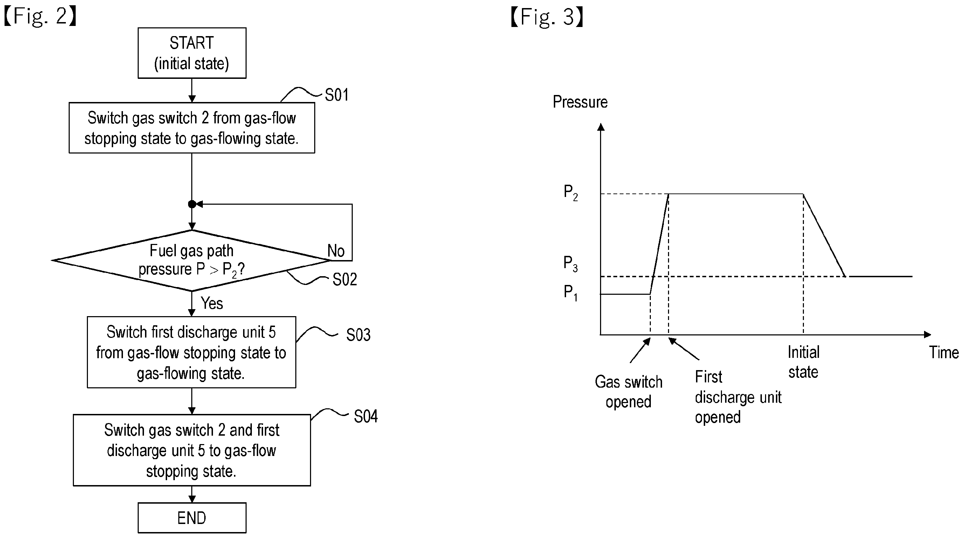

Operations of fuel cell 100 configured described above will be described below with reference to FIGS. 2 to 8. Note that, when the same step is illustrated in different drawings, the step will be described using the same reference sign, or the description of the step will be sometimes omitted.

Note that, during the stop of operation of fuel cell 100, gas switch 2 is in the gas-flow stopping state, first discharge unit 5 is in the gas-flow stopping state, and second discharge unit 7 is in the gas-flow stopping state. In the first embodiment, an initial state is defined as a state including the above-described states during the stop of operation of fuel cell 100.

FIG. 2 is a flow chart of a drainage operation utilizing pressure detection according to the first embodiment. FIG. 3 is a graph illustrating change of pressure over time during the drainage operation utilizing pressure detection according to the first embodiment.

First, at Step S01, controller 8 switches gas switch 2 from the gas-flow stopping state to the gas-flowing state to shift the process to Step S02. At this time, as illustrated in FIG. 3, the pressure of fuel gas path 1 gradually increases from P₁, which is an initial pressure value. Note that the initial pressure value P₁ is 1 kPa, for example. Note that, when a user operates operation unit 20 to transmit a direction for starting the drainage operation to controller 8, controller 8 may perform the process of Step S01.

Next, at Step S02, controller 8 determines whether or not the pressure of fuel gas path 1, that is, pressure value P measured by pressure detector 10 has exceeded threshold value P₂.

If pressure value P of fuel gas path 1 exceeds threshold value P₂ (Yes at Step S02), controller 8 shifts the process to Step S03. In contrast, if pressure value P of fuel gas path 1 is equal to or smaller than threshold value P₂ (No at Step S02), controller 8 shifts the process to Step S02, and repeats the process until pressure value P of fuel gas path 1 exceeds threshold value P₂.

Next, at Step S03, controller 8 switches first discharge unit 5 from the gas-flow stopping state to the gas-flowing state to shift the process to Step S04.

Through the control at Step S03, gas switch 2 becomes in the gas-flowing state, first discharge unit 5 becomes in the gas-flowing state, and second discharge unit 7 becomes in the gas-flow stopping state. Accordingly, first discharge path 4 becomes in a state of being open to atmosphere. At this time, the pressure inside first discharge path 4 is higher than atmospheric pressure, the condensed water having generated in fuel gas path 1, fuel cell 100, and recycling path 3 starts to be discharged via first discharge path 4. At this time, the pressure of fuel gas path 1 is maintained nearly at P₂. In the present disclosure, the operation for discharging the condensed water from fuel gas path 1, fuel cell 100, and recycling path 3 is defined as a drainage operation. Note that threshold value pressure P₂ is 3 kPa, for example. This value P₂ is determined in accordance with the amount of power generation by fuel cell 100 or the length of first discharge path 4.

Next, at Step S04, controller 8 switches gas switch 2 from the gas-flowing state to the gas-flow stopping state and switches first discharge unit 5 from the gas-flowing state to the gas-flow stopping state. In other words, controller 8 returns gas switch 2 and first discharge unit 5 to the initial state. With this, the drainage operation is completed. At this time, the pressure of fuel gas path 1 gradually decreases from P₂ towards P₃ as illustrated in FIG. 3. Pressure value P₃ is 2 kPa, for example. Note that, when the user operates operation unit 20 to transmit a direction for stopping the drainage operation to controller 8, controller 8 may perform the process of Step S04.

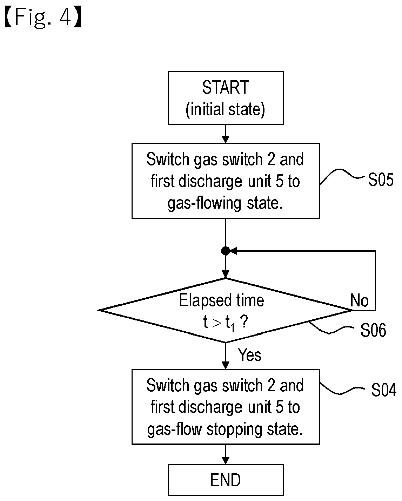

FIG. 4 is a flow chart of control utilizing the passage of time according to the first embodiment.

First, at Step S05, controller 8 switches gas switch 2 from the gas-flow stopping state to the gas-flowing state and switches first discharge unit 5 from the gas-flow stopping state to the gas-flowing state to shift the process to Step S06. Thus, the drainage operation is started.

Next, at Step 06, controller 8 determines whether or not elapsed time t from the start of the drainage operation has exceeded predetermined time ti. Note that predetermined time ti is shorter than the time required until almost all the condensed water stored in first discharge path 4 or tank 11 is discharged to the outside of fuel cell system 200. Predetermined time ti is 3 minutes, for example. Note that predetermined time ti is determined in accordance with, for example, the internal pressure of fuel gas path 1 and the length of first discharge path 4.

If elapsed time t exceeds predetermined time ti (Yes at Step S06), in other words, when the drainage operation is performed for a predetermined period, controller 8 shifts the process to Step S04. In contrast, elapsed time t is equal to or shorter than predetermined time ti (No at Step S06), controller 8 shifts the process to Step S06, and repeats the process until elapsed time t exceeds predetermined time ti.

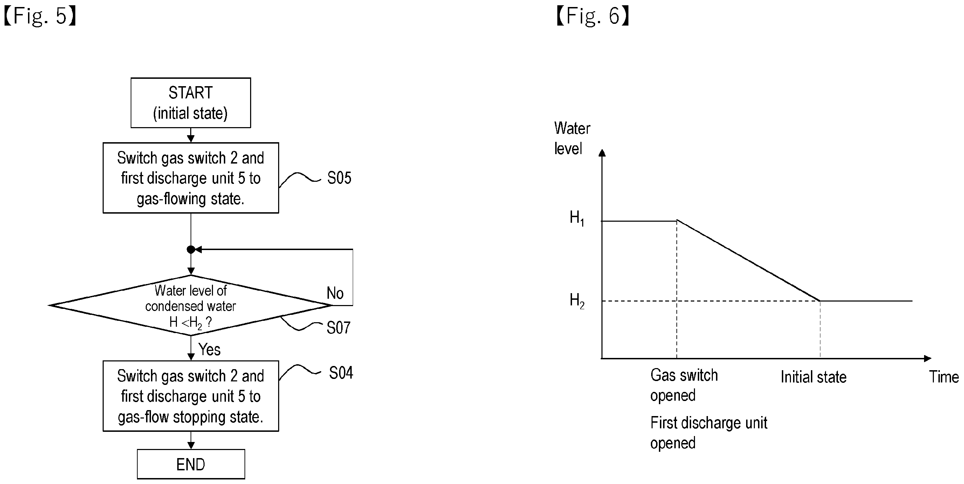

FIG. 5 is a flow chart of the drainage operation utilizing water level detection according to the first embodiment. FIG. 6 is a diagram illustrating the change of water level of the condensed water stored in first discharge path 4 over time during the drainage operation illustrated in FIG. 5.

First, at Step S05, controller 8 switches gas switch 2 from the gas-flow stopping state to the gas-flowing state and switches first discharge unit 5 from the gas-flow stopping state to the gas-flowing state, and shifts the process to Step S07. At this time, first discharge path 4 is in a state of being open to atmosphere, and the pressure of the hydrogen-containing gas is higher than atmospheric pressure. Accordingly, the condensed water stored in first discharge path 4 or tank 11 is discharged, and water level H of the condensed water starts to decrease from an initial water level H₁ to predetermined water level H₂, as illustrated in FIG. 6.

Next, at Step 07, controller 8 determines whether or not water level H of the condensed water stored in first discharge path 4 or tank 11 becomes lower than predetermined water level H₂. Note that, letting a water level under the absence of the condensed water stored in first discharge path 4 be 0, predetermined water level H₂ is approximately 5 cm, for example.

If water level H of the condensed water becomes lower than predetermined water level Hz (Yes at Step S07), controller 8 shifts the process to Step S04. In contrast, if water level H of the condensed water is equal to or higher than predetermined water level Hz (No at Step S07), controller 8 shifts the process to Step S07, and repeats the process until water level H of the condensed water becomes lower than predetermined water level H₂.

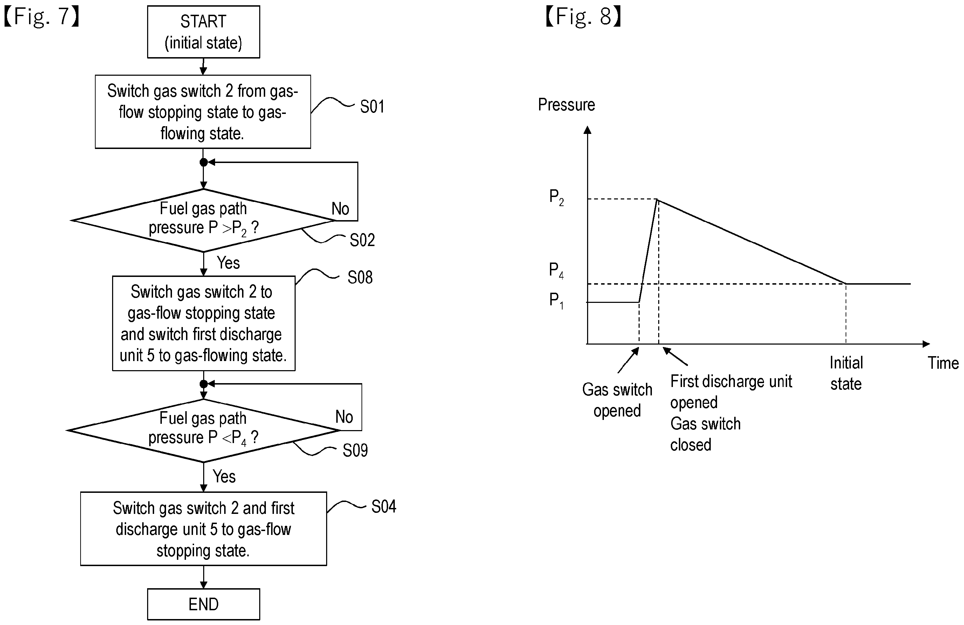

FIG. 7 is a flow chart of the drainage operation utilizing pressure detection according to the first embodiment. FIG. 8 is a graph illustrating the change of pressure in fuel gas path 1 over time during the drainage operation illustrated in FIG. 7.

First, at Step S01, controller 8 switches gas switch 2 from the gas-flow stopping state to the gas-flowing state to shift the process to Step S02. At this time, the pressure of fuel gas path 1 gradually increases from initial pressure value P₁ as illustrated in FIG. 8.

Next, at Step S02, controller 8 determines whether or not pressure value P measured by pressure detector 10 has exceeded threshold value P₂.

If pressure value P of fuel gas path 1 exceeds threshold value P₂ (Yes at Step S02), controller 8 shifts the process to Step S08. In contrast, if pressure value P of fuel gas path 1 is equal to or lower than threshold value P₂ (No at Step S02), controller 8 shifts the process to Step S02, and repeats until pressure value P of fuel gas path 1 exceeds threshold value P₂.

Next, at Step S08, controller 8 switches gas switch 2 from the gas-flowing state to the gas-flow stopping state and switches first discharge unit 5 from the gas-flow stopping state to the gas-flowing state to shift the process to Step S09. With this, the drainage operation is started. Note that, when gas switch 2 is switched from the gas-flowing state to the gas-flow stopping state, internal pressure P of fuel gas path 1 gradually decreases from P₂ toward P₄ as illustrated in FIG. 8. Note that threshold value P₄ is, for example, 2 kPa, and is beneficially higher than atmospheric pressure. When P₄ is in agreement with a value of atmospheric pressure, almost all the condensed water in first discharge path 4 is discharged to the outside of first discharge path 4, so that first discharge path 4 becomes in the state of being open to atmosphere.

Next, at Step S09, controller 8 determines whether or not pressure value P measured by pressure detector 10 is smaller than threshold value P₄.

When pressure value P of fuel gas path 1 is lower than threshold value P₄ (Yes at Step S09), controller 8 shifts the process to Step S04. In contrast, if pressure value P of fuel gas path 1 is equal to or higher than threshold value P₄ (No at Step S09), controller 8 shifts the process to Step S09, and repeats until pressure value P of fuel gas path 1 becomes lower than threshold value P₄.

### [1-3. Effects]

As described above, in the present embodiment, fuel cell system 200 includes: fuel cell 100 configured to generate electric power by using a hydrogen-containing gas; fuel gas path 1 connected to fuel cell 100 and configured to allow the hydrogen-containing gas to flow therethrough; gas switch 2 disposed in fuel gas path 1 and configured to switch between the first gas-flowing state causing the hydrogen-containing gas to flow through fuel gas path 1 and the first gas-flow stopping state stopping the hydrogen-containing gas flowing through fuel gas path 1; and recycling path 3 connected to fuel gas path 1 between gas switch 2 and fuel cell 100 and configured to allow the hydrogen-containing gas not having been used in power generation by fuel cell 100 to flow through recycling path 3.

Fuel cell system 100 further includes: first discharge path 4 connected to recycling path 3 and configured to allow discharge, to the outside, of condensed water formed from water vapor contained in the hydrogen-containing gas; first discharge unit 5 disposed in first discharge path 4 and configured to switch between the second gas-flowing state causing the hydrogen-containing gas to flow through first discharge path 4 and the second gas-flow stopping state stopping the hydrogen-containing gas flowing through first discharge path 4; second discharge path 6 disposed in recycling path 3 and configured to allow discharge, to the outside, of the hydrogen-containing gas flowing through fuel gas path 1; and second discharge unit 7 disposed in second discharge path 6 and configured to switch between the third gas-flowing state causing the hydrogen-containing gas to flow through second discharge path 6 and the third gas-flow stopping state stopping the hydrogen-containing gas flowing through second discharge path 6; and controller 8 configured to operate gas switch 2, first discharge unit 5, and second discharge unit 7.

The initial state is defined as a state in which gas switch 2 is in the first gas-flow stopping state, first discharge unit 5 is in the second gas-flow stopping state, and second discharge unit 7 is in the third gas-flow stopping state.

To perform the drainage operation for discharging the condensed water in fuel gas path 1, fuel cell 100, and recycling path 3 during the stop of power generation by fuel cell 100, controller 8 switches gas switch 2 in the initial state from the first gas-flow stopping state to the first gas-flowing state and switches first discharge unit 5 in the initial state from the second gas-flow stopping state to the second gas-flowing state.

With this, the condensed water can be discharged without making first discharge path 4 open to atmosphere. Therefore, when first discharge path 4 has a positive pressure, the hydrogen-containing gas is not discharged to the outside of fuel cell system 200, whereby the occurrence of unsafe events, such as emitting smoke and ignition, can be substantially prevented. In contrast, when first discharge path 4 has a negative pressure, air cannot reach fuel cell 100 from the outside via first discharge path 4, whereby deterioration of an electrolyte membrane disposed inside fuel cell 100 can be substantially prevented. Note that, shortly after the stop of operation of fuel cell system 200, for example, after the elapse of only approximately 30 minutes, temperatures of fuel gas path 1 and recycling path 3 decrease from high values, and volume reduction of the hydrogen-containing gas in the paths is caused, and, as a result, first discharge path 4 has a negative pressure.

In the present embodiment, fuel cell system 200 may further include gas circulator 9 disposed between fuel cell 100 and first discharge path 4 and configured to circulate the hydrogen-containing gas from recycling path 3 to fuel gas path 1.

Controller 8 may switch gas switch 2 in the initial state from the first gas-flow stopping state to the first gas-flowing state and switch first discharge unit 5 in the initial state from the second gas-flow stopping state to the second gas-flowing state, and then operate gas circulator 9 to perform the drainage operation.

With this operation, the pressure of the hydrogen-containing gas in first discharge path 4 can be increased. Accordingly, the condensed water can be discharged more quickly.

In the present embodiment, fuel cell system 200 may further include pressure detector 10 disposed between gas switch 2 and fuel cell 100 and configured to measure the pressure of the hydrogen-containing gas flowing through fuel gas path 1.

When a value measured by pressure detector 10 exceeds predetermined value P₂ after controller 8 switches gas switch 2 in the initial state from the first gas-flow stopping state to the first gas-flowing state, controller 8 may switch first discharge unit 5 in the initial state from the second gas-flow stopping state to the second gas-flowing state to perform the drainage operation.

With this operation, the drainage operation is performed based on the pressure value of fuel gas path 1, so that the drainage speed of the condensed water can be adjusted. Therefore, by setting P₂ at an appropriate value, the condensed water can be drained efficiently.

Furthermore, in the present embodiment, when controller 8 performs the drainage operation for a predetermined period after switching gas switch 2 in the initial state from the first gas-flow stopping state to the first gas-flowing state and switching first discharge unit 5 in the initial state from the second gas-flow stopping state to the second gas-flowing state, controller 8 may subsequently switch gas switch 2 from the first gas-flowing state to the first gas-flow stopping state and switch first discharge unit 5 from the second gas-flowing state to the second gas-flow stopping state to stop the drainage operation.

With this operation, the condensed water can be discharged without making first discharge path 4 open to atmosphere. Thus, the hydrogen-containing gas can be prevented from flowing to the outside of fuel cell system 200.

In the present embodiment, fuel cell system 200 may further include: tank 11 disposed in recycling path 3 and configured to store the condensed water; and a water level detector disposed inside tank 11 and configured to detect the water level of the condensed water stored in tank 11.

When the water level of tank 11 falls to predetermined water level Hz during the drainage operation after controller 8 switches gas switch 2 in the initial state from the first gas-flow stopping state to the first gas-flowing state and switches first discharge unit 5 in the initial state from the second gas-flow stopping state to the second gas-flowing state, controller 8 may switch gas switch 2 from the first gas-flowing state to the first gas-flow stopping state and switch first discharge unit 5 from the second gas-flowing state to the second gas-flow stopping state to stop the drainage operation.

With this operation, the condensed water can be discharged without making first discharge path 4 open to atmosphere. Thus, the hydrogen-containing gas can be prevented from flowing to the outside of fuel cell system 200.

Furthermore, in the present embodiment, when a value measured by pressure detector 10 becomes smaller than predetermined value P₄ after the drainage operation, controller 8 may switch gas switch 2 from the first gas-flowing state to the first gas-flow stopping state and switch first discharge unit 5 from the second gas-flowing state to the second gas-flow stopping state to stop the drainage operation.

With this operation, the condensed water can be discharged without making first discharge path 4 open to atmosphere. Thus, the hydrogen-containing gas can be prevented from flowing to the outside of fuel cell system 200.

### (Other Embodiments)

As described above, the embodiments are merely for exemplifying the technology according to the present disclosure, and therefore, the embodiments may be subjected to various modifications, substitutions, additions, omissions, or the likes within the scope of the claims and their equivalents.

### INDUSTRIAL APPLICABILITY

The fuel cell system according to the present disclosure is applicable to, for example, stationary or automotive fuel cell systems including a polymer electrolyte fuel cell or a solid oxide fuel cell.

### REFERENCE MARKS IN THE DRAWINGS

- 1: fuel gas path
- 2: gas switch
- 3: recycling path
- 4: first discharge path
- 5: first discharge unit
- 6: second discharge path
- 7: second discharge unit
- 8: controller
- 9: gas circulator
- 10: pressure detector
- 11: tank
- 12: water level detector
- 20: operation unit
- 100: fuel cell
- 200: fuel cell system

## Claims

1. A fuel cell system, comprising:
a fuel cell configured to generate electric power by using a hydrogen-containing gas;
a fuel gas path connected to the fuel cell and configured to allow the hydrogen-containing gas to flow through the fuel gas path;
a gas switch disposed in the fuel gas path and configured to switch between a first gas-flowing state and a first gas-flow stopping state,
the first gas-flowing state causing the hydrogen-containing gas to flow through the fuel gas path,
the first gas-flow stopping state stopping the hydrogen-containing gas flowing through the fuel gas path;
a recycling path connected to the fuel gas path between the gas switch and the fuel cell and configured to allow a part of the hydrogen-containing gas to flow through the fuel gas path,
the part of the hydrogen-containing gas not being used in power generation by the fuel cell;
a first discharge path connected to the recycling path and configured to allow discharge of condensed water to outside,
the condensed water being formed from water vapor contained in the hydrogen-containing gas;
a first discharge unit disposed in the first discharge path and configured to switch between a second gas-flowing state and a second gas-flow stopping state,
the second gas-flowing state causing the hydrogen-containing gas to flow through the first discharge path,
the second gas-flow stopping state stopping the hydrogen-containing gas flowing through the first discharge path;
a second discharge path connected to the recycling path and configured to allow discharge, to outside, of the hydrogen-containing gas flowing through the fuel gas path;
a second discharge unit disposed in the second discharge path and configured to switch between a third gas-flowing state and a third gas-flow stopping state,
the third gas-flowing state causing the hydrogen-containing gas to flow through the second discharge path,
the third gas-flow stopping state stopping the hydrogen-containing gas flowing through the second discharge path; and
a controller configured to operate the gas switch, the first discharge unit, and the second discharge unit,
wherein an initial state is defined as a state in which the gas switch is in the first gas-flow stopping state, the first discharge unit is in the second gas-flow stopping state, and the second discharge unit is in the third gas-flow stopping state, and
wherein, to perform a drainage operation for discharging the condensed water in the fuel gas path, the fuel cell, and the recycling path during stop of power generation by the fuel cell, the controller switches the gas switch in the initial state from the first gas-flow stopping state to the first gas-flowing state and switches the first discharge unit in the initial state from the second gas-flow stopping state to the second gas-flowing state.

2. The fuel cell system according to claim 1, further comprising:
a gas circulator disposed between the fuel cell and the first discharge path and configured to circulate the hydrogen-containing gas from the recycling path to the fuel gas path,
wherein the controller switches the gas switch in the initial state from the first gas-flow stopping state to the first gas-flowing state and switches the first discharge unit in the initial state from the second gas-flow stopping state to the second gas-flowing state, and subsequently operates the gas circulator to perform the drainage operation.

3. The fuel cell system according to claim 1 or 2, further comprising:
a pressure detector disposed between the gas switch and the fuel cell and configured to measure a pressure of the hydrogen-containing gas flowing through the fuel gas path,
wherein, when a value measured by the pressure detector exceeds a first predetermined value after the controller switches the gas switch in the initial state from the first gas-flow stopping state to the first gas-flowing state, the controller switches the first discharge unit from the second gas-flow stopping state to the second gas-flowing state to perform the drainage operation.

4. The fuel cell system according to any one of claims 1 to 3,
wherein, when the controller performs the drainage operation for a predetermined period after switching the gas switch in the initial state from the first gas-flow stopping state to the first gas-flowing state and switching the first discharge unit in the initial state from the second gas-flow stopping state to the second gas-flowing state, the controller subsequently switches the gas switch from the first gas-flowing state to the first gas-flow stopping state and switches the first discharge unit from the second gas-flowing state to the second gas-flow stopping state to stop the drainage operation.

5. The fuel cell system according to claim 2, further comprising:
a tank disposed in the recycling path and configured to store the condensed water; and
a water level detector disposed inside the tank and configured to detect a water level of the condensed water stored in the tank,
wherein, when the water level in the tank falls to a predetermined water level during the drainage operation after the controller switches the gas switch in the initial state from the first gas-flow stopping state to the first gas-flowing state and switches the first discharge unit in the initial state from the second gas-flow stopping state to the second gas-flowing state, the controller switches the gas switch from the first gas-flowing state to the first gas-flow stopping state and switches the first discharge unit from the second gas-flowing state to the second gas-flow stopping state to stop the drainage operation.

6. The fuel cell system according to claim 3,
wherein, when a value measured by the pressure detector becomes smaller than a second predetermined value after the drainage operation, the controller switches the gas switch from the first gas-flowing state to the first gas-flow stopping state and switches the first discharge unit from the second gas-flowing state to the second gas-flow stopping state to stop the drainage operation.
